# EUROPÄISCHE PATENTSCHRIFT

(11) **EP 3 249 326 B1**
(45) Veröffentlichungstag und Bekanntmachung des Hinweises auf die Patenterteilung: **05.06.2019**
(21) Anmeldenummer: 17165186.2
(22) Anmeldetag: 06.04.2017
(51) Int. Cl.: F26B 13/16

(54) **TROCKNEREINRICHTUNG FÜR EINE TEXTILE WARENBAHN MIT EINER VERBESSERTEN EINRICHTUNG ZUR WÄRMEEINBRINGUNG**
DRYING UNIT FOR A CONTINUOUS WEB OF TEXTILE FABRIC WITH AN IMPROVED DEVICE FOR HEAT APPLICATION
DISPOSITIF DE SÉCHOIR POUR UNE BANDE TEXTILE COMPRENANT UN DISPOSITIF AMÉLIORÉ DESTINÉ À APPORTER DE LA CHALEUR

(30) Priorität: 25.05.2016 DE 102016109415
(43) Veröffentlichungstag der Anmeldung: 29.11.2017
(73) Patentinhaber: Trützschler GmbH & Co. KG, 41199 Mönchengladbach (DE)
(72) Erfinder: Böhn, Markus, 63512 Hainburg (DE)

(56) Entgegenhaltungen:
- EP-A1- 1 371 925
- EP-A1- 2 543 643
- DE-A1- 4 325 915
- DE-B4-102012 109 878
- DE-U1-202011 005 041

## Beschreibung

Die vorliegende Erfindung betrifft eine Trocknereinrichtung mit einem Trockner für eine textile Warenbahn mit einem Trocknerraum, in dem wenigstens eine luftdurchlässige Trommel drehbar angeordnet ist und wobei die textile Warenbahn über einen Teilumfang der Trommel führbar ist, wobei die textile Warenbahn mit erwärmter Trocknungsluft durchströmbar ist, und wobei zur Erwärmung der Trocknungsluft eine Einrichtung zur Wärmeeinbringung vorgesehen ist.

Die DE 10 2012 109 878 B4 offenbart einen Trockner für eine textile Warenbahn mit einem Trocknerraum, in dem mehrere luftdurchlässige Trommeln drehbar angeordnet sind. Ein Ventilator zieht über eine Saugseite feuchte Trocknungsluft aus der Innenseite der Trommel, wobei jeder Trommel ein separater Ventilator zugeordnet ist. Der vor dem Ventilator gebildete Saugzug der Trocknungsluft durchwandert den Ventilator und gelangt in einen Heizungs- und Ventilatorraum. Eine Zwischenkammer ist zwischen einer Stirnseite der Trommeln und dem Heizungs- und Ventilatorraum eingerichtet und bildet einen geschlossenen Raum, der jedoch mit einem Saugzug in Verbindung steht. Folglich strömt die feuchte Trocknungsluft aus der Innenseite der Trommel in die Zwischenkammer ein, und der Ventilator saugt über seine Saugseite die Trocknungsluft schließlich an und gibt diese in den Heizungs- und Ventilatorraum ab. In der Zwischenkammer wird der Trocknungsluft Frischluft zugeführt und ein Teil der feuchten Trocknungsluft wird als Abluft aus der Zwischenkammer abgeführt. Zur Verbesserung des Wirkungsgrades wird vorgeschlagen, mit einem Wärmetauscher die angesaugte Frischluft mit der abgeführten Abluft zu erwärmen, sodass die Frischluft vorgewärmt in die Zwischenkammer eintreten kann. Damit kann der Wirkungsgrad des Trockners erhöht werden, indem durch die Vorheizung der Frischluft durch die im Heizungs- und Ventilatorraum angeordneten Heizelemente weniger Heizleistung eingebracht werden muss.

Die Heizelemente müssen dabei so ausgelegt werden, dass die gesamte Wärmeeinbringung zur Ausführung des Trocknungsprozesses mit dem Trockner erfolgen kann.

Die DE 202011005041 U1 offenbart einen Trockner in Reihenbauweise, bei dem ein vorgeschalteter Wärmetauscher die zugeführte Frischluft durch die Abluft erwärmt.

Die EP 1371925 A1 offenbart einen Trockner für Schüttgut bzw. Feuchtgut mit einem Notkühlmodul, in dem die Abluft eines Blockheizkraftwerkes genutzt wird, um die Trocknungsluft zu erwärmen. Trockner der hier interessierenden Art erfordern in Abhängigkeit der Form und Größe sowie des Feuchtegehaltes der textilen Warenbahn Heizleistungen im Bereich von einem bis mehreren Megawatt. Wird die Heizleistung beispielsweise mit Gasgebläsebrennern bereitgestellt, müssen diese entsprechend dimensioniert werden. Dabei können bis zu 1,5 kWh pro Kilogramm der textilen Warenbahn benötigt werden, sodass es wünschenswert ist, die Einrichtung zur Wärmeeinbringung vorteilhaft weiterzubilden.

Die Aufgabe der Erfindung betrifft die Weiterbildung einer Trocknereinrichtung mit einem Trockner für eine textile Warenbahn, die eine verbesserte Einrichtung zur Energieeinbringung aufweist.

Diese Aufgabe wird ausgehend von einer Trocknereinrichtung gemäß dem Oberbegriff des Anspruches 1 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Einrichtung zur Wärmeeinbringung eine interne Heißgasquelle und eine externe Heißgasquelle aufweist, wobei die interne Heißgasquelle einen Bestandteil des Trockners bildet und wobei die externe Heißgasquelle peripher zum Trockner eingerichtet ist und wenigstens mittelbar mit dem Trockner mittels einer Heißgasleitung verbunden ist.

Kern der Erfindung ist eine wenigstens zweiteilige Einrichtung zur Wärmeeinbringung mit einer internen Heißgasquelle und einer externen Heißgasquelle. Dabei sind Trockner bereits bekannt, die eine interne Heißgasquelle aufweisen, die zur Aufheizung der Trocknungsluft eingerichtet ist. Die Einrichtung zur Wärmeeinbringung umfasst dabei erfindungsgemäß zusätzlich eine externe Heißgasquelle, sodass mit dem Trockner und der externen Heißgasquelle eine Trocknereinrichtung gebildet wird. Die externe Heißgasquelle ist dabei peripher zum Trockner angeordnet, sodass die externe Heißgasquelle mit dem Trockner keine bauliche Einheit bildet, und die externe Heißgasquelle ist lediglich über die Heißgasleitung mit dem Trockner zumindest mittelbar verbunden.

Die wenigstens mittelbare Verbindung der Heißgasleitung mit dem Trockner betrifft dabei Ausführungen, bei denen die externe Heißgasquelle beispielsweise unmittelbar ein Heißgas produziert, beispielsweise ein Rauchgas, welches über die Heißgasleitung direkt in den Trockner geleitet wird. Bei lediglich mittelbaren Verbindungen ist es zudem denkbar, dass wenigstens ein Wärmetauscher zwischen der externen Heißgasquelle und dem Trockner eingerichtet ist, sodass die Heißluft nicht unmittelbar in den Trockner geleitet werden muss. Der Energiefluss erfolgt dabei jedoch effektiv von der externen Heißgasquelle in den Trockner hinein.

Die Erfindung nutzt dabei auf vorteilhafte Weise die Möglichkeit, externe Heißgasquellen, die beispielsweise in der Peripherie des Trockners vorhanden sind, zur Erwärmung der Trocknungsluft zu nutzen. Folgerichtig muss die interne Heißgasquelle mit einer geringeren Energie betrieben werden, sodass Eingangsstoffe, beispielsweise Brenngas oder Flüssigbrennstoff, eingespart werden können.

Eine vorteilhafte Variante zur Ausbildung der Trocknereinrichtung sieht vor, dass die interne Heißgasquelle mittels eines Gasgebläsebrenners gebildet wird, welcher Gasgebläsebrenner im oder an dem Trockner angeordnet ist. Die interne Heißgasquelle bildet folglich eine bauliche Einheit mit dem Trockner. Erfindungsgemäß ist die externe Heißgasquelle mit besonderem Vorteil mittels eines Blockheizkraftwerkes gebildet, das über die Heißgasleitung wenigstens mittelbar Wärme in den Trocknerraum überführt. Blockheizkraftwerke können beispielsweise Bestandteil einer Gebäudeinstallation sein, in der der Trockner betrieben wird. Mit dem Blockheizkraftwerk kann aufbauend auf einem Trockner, der an in an sich bekannter Weise mit einer internen Heißgasquelle ausgebildet ist, erfindungsgemäß die Trocknereinrichtung gebildet werden. Über die Heißgasleitung wird Wärme vom Blockheizkraftwerk an den Trockner überführt, wobei das Rauchgas des Blockheizkraftwerkes nicht unmittelbar über die Heißgasleitung in den Trockner, insbesondere in den Trocknerraum, überführt werden muss, und es kann wenigstens ein Wärmetauscher vorgesehen sein, bis zu dem die Heißgasleitung führt.

Ein weiterer Vorteil zur Ausbildung der Trocknereinrichtung wird mit einer Steuereinheit erreicht, welche zur Steuerung der internen Heißgasquelle und der externen Heißgasquelle eingerichtet ist. Die Steuereinheit ist dabei mit Vorteil derart zur Ansteuerung der Heißgasquellen eingerichtet, dass die externe Heißgasquelle eine Wärmegrundversorgung des Trockners bildet und dass die interne Heißgasquelle eine Temperaturregelung für die Trocknungsluft bildet. Werden sowohl die interne als auch die externe Heißgasquelle zur Erwärmung der Trocknungsluft genutzt, so addieren sich die Wärmeeinträge aus der internen und der externen Heißgasquelle. Eine Wärme-Grundversorgung zur Aufheizung der Trocknungsluft wird erfindungsgemäß mit der externen Heißgasquelle vorgenommen, und zur Einjustierung beispielsweise einer effektiven Trocknungslufttemperatur zur Überführung in den Trocknerraum kann eingeregelt werden durch eine entsprechende Ansteuerung der internen Heißgasquelle, also beispielsweise dem Gasgebläsebrenner. Im Ergebnis ermöglicht die erfindungsgemäß ausgebildete Trocknereinrichtung trotz einer beispielsweise konstanten externen Grundversorgung des Trockners mit Wärme die Möglichkeit, eine notwendige Einjustierung der insgesamt eingebrachten Wärmemenge zu ermöglichen, ohne dass unmittelbar Einfluss auf den Betrieb der externen Heißgasquelle, also insbesondere des Blockheizkraftwerkes genommen werden muss.

Mit weiterem Vorteil weist der Trockner ein Mischmodul auf, wobei die interne Heizgasquelle und die externe Heißgasquelle zur Einspeisung von Wärme in das Mischmodul mit diesem verbunden sind und wobei im Mischmodul die Heißgase der Heißgasquellen mischbar sind und wobei das gemischte Heißgas an die Trocknungsluft zur Aufheizung abgebbar ist. Das Mischmodul dient dabei zur Mischung der zugeführten Heißgase, sodass sich aus den Temperaturen der beiden zugeführten Heißgase eine thermodynamische Mitteltemperatur für das aus dem Mischmodul an die Trocknungsluft abgegebene Heißgas ergibt.

Zur Ansteuerung des Mischmoduls kann mit weiterem Vorteil die Steuereinheit mit dem Mischmodul verbunden sein, wobei das Mischmodul ein Steuerorgan aufweist, mit dem die Zufuhr der Heißgase der Heißgasquellen zur Mischung steuerbar sind. Beispielsweise kann das Mischungsverhältnis der beiden Heißgase aus der internen und externen Heißgasquelle mit dem Mischorgan geregelt werden, wobei es auch denkbar ist, dass das Mischorgan zur Regelung des Gesamt-Wärmeeintrags in die Trocknungsluft ausgebildet sein kann.

Erfindungsgemäß weist der Trockner einen ersten Wärmetauscher auf, der mit dem Heißgas der externen Heißgasquelle durchströmbar ist und mit dem Wärme an die Trocknungsluft abgebbar ist. Abhängig von der Ausführungsform der externen Heißgasquelle wird mit der Einrichtung des ersten Wärmetauschers erreicht, dass das Rauchgas der externen Heißgasquelle nicht in Kontakt mit der textilen Warenbahn gelangt. Nachteilhafterweise ergibt sich ein Wärmeverlust durch die Verwendung eines Wärmetauschers, wobei das aus dem ersten Wärmetauscher wieder herausgeführte Heißgas zum weiteren Energieeintrag in den Trockner genutzt werden kann.

Beispielsweise ist es denkbar, einen Frischluftwärmetauscher zusätzlich vorzusehen, der vom Heißgas der externen Heißgasquelle durchströmbar ist, wobei der Frischluftwärmetauscher dem ersten Wärmetauscher nachgelagert ist, und wobei eine in den Trocknerraum eintretende Frischluft mittels des Frischluftwärmetauschers vor Eintritt in den Trocknerraum erwärmbar ist. Das Heißgas der externen Heißgasquelle durchströmt folglich zunächst den ersten Wärmetauscher und nachfolgend den Frischluftwärmetauscher. Dabei kann kaskardenförmig die Wärme aus dem Heißgas der externen Heißgasquelle an die Trocknungsluft abgegeben werden.

Erfindungsgemäß ist neben dem ersten Wärmetauscher ein Vorwärmetauscher vorgesehen, in den die Heißgasleitung aus der externen Heißgasquelle hineingeführt ist und der zur Wärmeübergabe an ein Wärmefluid in einer Fluidleitung eingerichtet ist, welche Fluidleitung mit einem ersten Wärmetauscher des Trockners gekoppelt ist. Beispielsweise ist das Wärmefluid durch ein Thermalöl gebildet, das mit dem Vorwärmetauscher über das Heizgas der externen Wärmequelle, also beispielsweise mit dem Rauchgas eines Blockheizkraftwerkes, aufgewärmt wird, und das Thermalöl wird nachfolgend in den ersten Wärmetauscher des Trockners überführt, um über den ersten Wärmetauscher die Trocknungsluft aufzuheizen. Auch mit einem Vorwärmetauscher wird erreicht, dass das Heißgas der externen Heißgasquelle kaskadenförmig folglich zunächst den Vorwärmetauscher und nachfolgend den Frischluftwärmetauscher durchströmt. Dabei kann die Wärme aus dem Heißgas der externen Heißgasquelle verbessert an die Trocknungsluft abgegeben werden.

Gemäß einer noch weiteren Verbesserung der Trocknereinrichtung ist wenigstens ein Feuchtemesselement zur Messung der Feuchte der Trocknungsluft im Trocknerraum vorgesehen, wobei die Steuereinheit zur Aufnahme von Feuchtemesswerten des Feuchtemesselementes ausgebildet ist und die Heißgasquellen in Abhängigkeit der Feuchtemesswerte ansteuert. Mit dem Feuchtemesselement und der Steuereinheit kann insbesondere über das Mischmodul der Wärmeeintrag aus den beiden Heißgasquellen so eingeregelt werden, dass ein gewünschter Feuchtemesswert in der Trocknungsluft erreicht wird. Dabei sieht die Regelung eine möglichst hohe Auslastung der externen Wärmequelle vor, sodass die interne Wärmequelle, also beispielsweise der Gasgebläsebrenner, möglichst auf einem minimalen Energieniveau betrieben wird.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Figur 1: eine schematische Ansicht einer Trocknungseinrichtung, nicht Teil der vorliegenden Erfindung, mit einem Trockner und mit einer externen Heißgasquelle, die ein Blockheizkraftwerk umfasst,
- Figur 2: eine Variante, nicht Teil der vorliegenden Erfindung, des Ausführungsbeispiels gemäß Figur 1 mit einem ersten Wärmetauscher im Trockner und
- Figur 3: eine weitere Variante, gemäß der vorliegenden Erfindung, des Trockners gemäß Figur 2, wobei ein Vorwärmetauscher eingerichtet ist, der mit dem ersten Wärmetauscher einen internen Wärmetauscherkreislauf bildet.

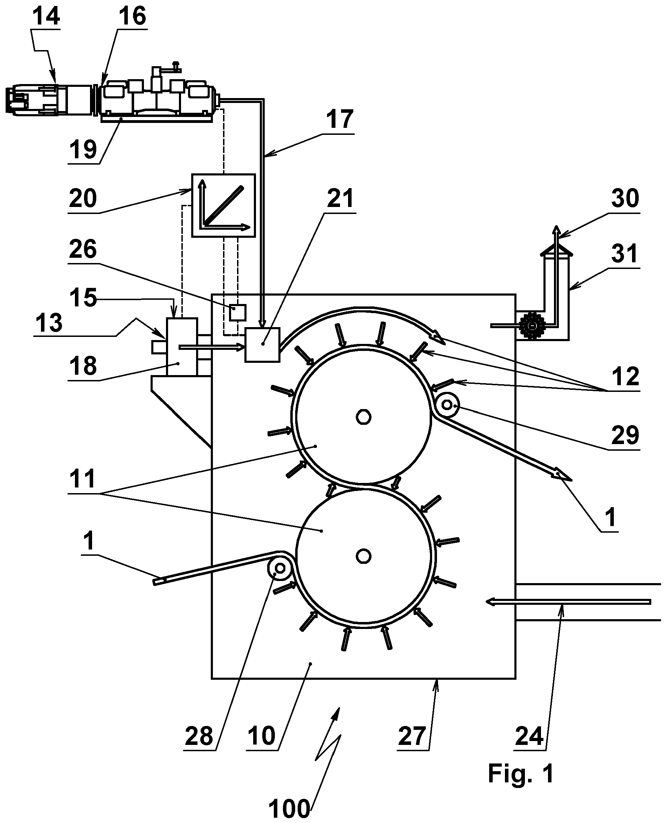

Die Figuren 1, 2 und 3 zeigen jeweils eine Trocknereinrichtung mit einem Trockner 100 zur Trocknung einer textilen Warenbahn 1. Der Trockner 100 weist ein Gehäuse 27 auf, in dem ein Trocknerraum 10 gebildet ist. Gezeigt sind zwei luftdurchlässige Trommeln 11, die drehbar im Trocknerraum 10 angeordnet sind, und die textile Warenbahn 1 umschlingt zunächst die erste Trommel 11 und anschließend die zweite Trommel 11. Zum Einlauf und zur Heranführung der textilen Warenbahn 1 an die erste Trommel 11 dient eine Einlaufwalze 28, und zum Auslauf der textilen Warenbahn 1 und zur Abführung von der zweiten Trommel 11 dient eine Auslaufwalze 29.

Mit mehreren Pfeilen ist dargestellt, dass die textile Warenbahn 1 in Anordnung an der Außenumfangsfläche der Trommeln 11 mit einer Trocknungsluft 12 durchströmbar sind, sodass sich die Trocknungsluft 12 in der Innenseite der Trommeln 11 sammelt, aus der diese über nicht weiter gezeigte Einrichtungen abgesaugt wird.

Ein Teil der Trocknungsluft 12 wird als Abluft 30 über eine Ablufteinrichtung 31 aus dem Trocknerraum 10 herausgeführt, und Frischluft 24 wird dem Trocknerraum 10 zugeführt, die sich mit der Trocknungsluft 12 mischt.

Eine interne Heißgasquelle 15 bildet eine erste Einrichtung 13 zur Wärmeeinbringung, wobei die interne Heißgasquelle 15 in den Ausführungsbeispielen einen Gasgebläsebrenner 18 umfasst. Weiterhin weist die Trocknereinrichtung eine externe Heißgasquelle 16 auf, die eine weitere Einrichtung 14 zur Wärmeeinbringung bildet, und die externe Heißgasquelle 16 umfasst ein Blockheizkraftwerk 19. Über eine Heißgasleitung 17 wird heißes Gas aus dem Blockheizkraftwerk 19 herausgeführt, und in unmittelbarer oder mittelbarer Weise wird die Wärme aus dem Blockheizkraftwerk 19 der Trocknungsluft 12 im Trocknerraum 10 zugeführt.

Figur 1 zeigt ein Ausführungsbeispiel, nicht Teil der vorliegenden Erfindung, in dem die Heißgasleitung 17 einem Mischmodul 21 im Trocknerraum 10 zugeführt wird. In das Mischmodul 21 wird sowohl das Heißgas aus der internen Heißgasquelle 15 als auch das Heißgas aus der externen Heißgasquelle 16 über die Heißgasleitung 17 zugeführt. In dem Mischmodul 21 werden die Heißgase vermischt und an die Trocknungsluft 12 abgegeben.

Das Ausführungsbeispiel gemäß Figur 1 zeigt weiterhin eine Steuereinheit 20, die mit dem Blockheizkraftwerk 19 und mit dem Gasgebläsebrenner 18 verbunden ist, um diese entsprechend anzusteuern. Weiterhin ist eine Verbindung der Steuereinheit 20 mit dem Mischmodul 21 gezeigt, um das Mischmodul 21 so anzusteuern, dass möglichst ein großer Energiebetrag aus der externen Heißgasquelle 16 an die Trocknungsluft 12 abgegeben wird, und dass die interne Heißgasquelle 15 mit einem möglichst minimalen Energieniveau betrieben wird.

Zur Feuchtemessung ist ein Feuchtemesselement 26 gezeigt und mit der Steuereinheit 20 verbunden, mit dem die Feuchte der Trocknungsluft 12 gemessen werden kann, um die interne und externe Heißgasquelle 15 und 16 und insbesondere das Mischmodul 21 entsprechend anzusteuern.

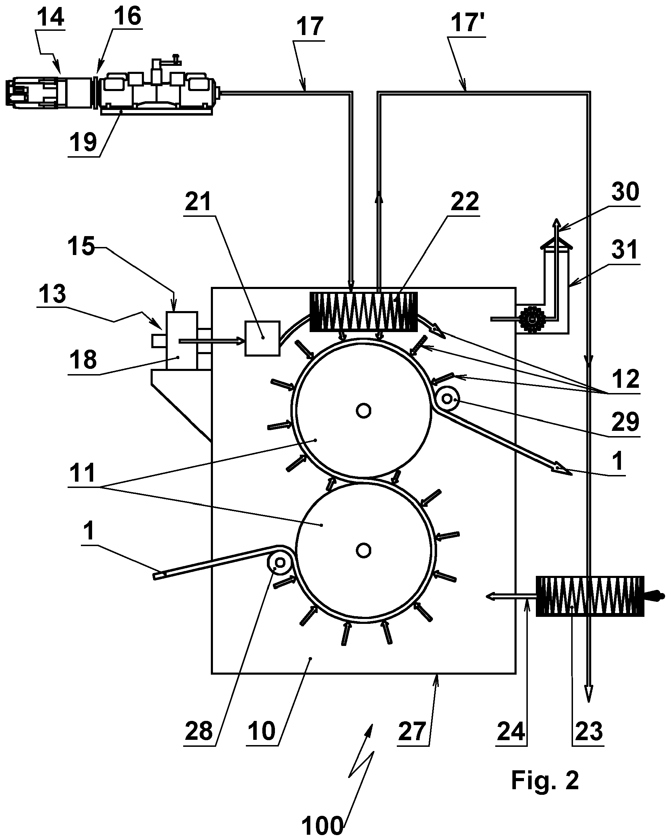

Das Ausführungsbeispiel, nicht Teil der vorliegenden Erfindung, gemäß Figur 2 zeigt in Abwandlung zum Ausführungsbeispiel gemäß Figur 1 einen ersten Wärmetauscher 22, und über die Heißgasleitung 17 wird Heißgas vom Blockheizkraftwerk 19 dem ersten Wärmetauscher 22 zugeführt. Über den ersten Wärmetauscher 22 wird die Trocknungsluft 12 erwärmt, wobei die eingebrachte Wärme zunächst dem Mischmodul 21 zugeführt wird.

Die Heißgasleitung 17 wird aus dem ersten Wärmetauscher 22 wieder herausgeführt, sodass die Heißgasleitung 17' einem Frischluftwärmetauscher 23 zugeführt werden kann, um die in den Trocknerraum 10 eintretende Frischluft 24 vorzuwärmen. Dadurch ergibt sich eine noch bessere energetische Nutzung der mit dem Blockheizkraftwerk 19 bereitgestellten Wärmemenge.

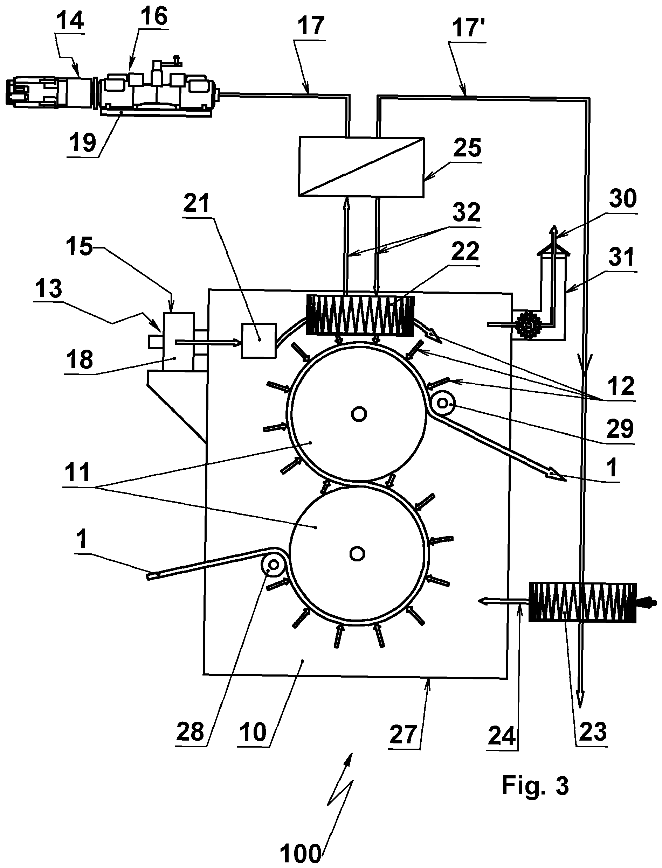

Figur 3 zeigt das Ausführungsbeispiel gemäß Figur 2 mit einem weiteren Wärmetauscher, der einen Vorwärmetauscher 25 bildet.

Die Heißgasleitung 17 aus dem Blockheizkraftwerk 19 wird in den Vorwärmetauscher 25 überführt, der Wärme mit einem Wärmefluid in einer Fluidleitung 32 tauscht, beispielsweise gebildet durch ein Thermalöl. Nach dem Durchlauf des Heißgases aus der Heißgasleitung 17 führt die Heißgasleitung 17' weiter zum Frischluftwärmetauscher 23, um die in den Trocknerraum 10 eintretende Frischluft 24 vorzuwärmen, wie in Zusammenhang mit der Figur 2 bereits beschrieben. Der Vorwärmetauscher 25 kann dabei in der Nähe des Blockheizkraftwerkes 19 angeordnet sein, insbesondere besteht die Möglichkeit, dass der Vorwärmetauscher 25 in bauliche Einheit mit der externen Heißgasquelle 16 eingerichtet ist. Der Vorteil liegt dabei in einer besseren Transportierbarkeit der Wärme in einem Wärmefluid in der Fluidleitung 32, um an den Wärmetauscher 22 geführt zu werden.

Die lediglich in Zusammenhang mit Figur 1 gezeigte und beschriebene Steuereinheit 20 und das Feuchtemesselement 26 können im Ausführungsbeispiel gemäß Figur 2 und im Ausführungsbeispiel gemäß Figur 3 auf gleiche Weise vorgesehen und eingerichtet sein. Insbesondere besteht auch die Möglichkeit, den Vorwärmetauscher 25 und/oder den Frischluftwärmetauscher 23 mit der Steuereinheit 20 anzusteuern, beispielsweise um die Menge der jeweiligen Energieübertragungen oder Energieeinträge zu steuern.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichen

- 100: Trockner

- 1: textile Warenbahn

- 10: Trocknerraum
- 11: Trommel
- 12: Trocknungsluft
- 13: Einrichtung zur Wärmeeinbringung
- 14: Einrichtung zur Wärmeeinbringung
- 15: interne Heißgasquelle
- 16: externe Heißgasquelle
- 17: Heißgasleitung
- 17': Heißgasleitung
- 18: Gasgebläsebrenner
- 19: Blockheizkraftwerk
- 20: Steuereinheit
- 21: Mischmodul
- 22: Wärmetauscher
- 23: Frischluftwärmetauscher
- 24: Frischluft
- 25: Vorwärmetauscher
- 26: Feuchtemesselement
- 27: Gehäuse
- 28: Einlaufwalze
- 29: Auslaufwalze
- 30: Abluft
- 31: Ablufteinrichtung
- 32: Fluidleitung

## Patentansprüche

1. Trocknereinrichtung mit einem Trockner (100) für eine textile Warenbahn (1) mit einem Trocknerraum (10), in dem wenigstens eine luftdurchlässige Trommel (11) drehbar angeordnet ist und wobei die textile Warenbahn (1) über einen Teilumfang der Trommel (11) führbar ist, wobei die textile Warenbahn (1) mit erwärmter Trocknungsluft (12) durchströmbar ist, und wobei zur Erwärmung der Trocknungsluft (12) eine Einrichtung (13, 14) zur Wärmeeinbringung vorgesehen ist, wobei die Einrichtung (13, 14) zur Wärmeeinbringung eine interne Heißgasquelle (15) aufweist, wobei die interne Heißgasquelle (15) einen Bestandteil des Trockners (100) bildet und wobei der Trockner (100) einen ersten Wärmetauscher (22) aufweist, mit dem Wärme an die Trocknungsluft (12) abgebbar ist, **dadurch gekennzeichnet, dass** die Einrichtung (13, 14) eine externe Heißgasquelle (16) aufweist, die peripher zum Trockner (100) eingerichtet ist und wenigstens mittelbar mit dem Trockner (100) mittels einer Heißgasleitung (17) verbunden ist, und dass ein Vorwärmetauscher (25) vorgesehen ist, in den die Heißgasleitung (17) aus der externen Heißgasquelle (16) hineingeführt ist und der zur Wärmeübergabe an ein Wärmefluid in einer Fluidleitung (32) eingerichtet ist, welche Fluidleitung (26) mit dem ersten Wärmetauscher (22) des Trockners (100) gekoppelt ist.

2. Trocknereinrichtung nach Anspruch 1, **dadurch gekennzeichnet, dass** die interne Heißgasquelle (15) mittels eines Gasgebläsebrenners (18) gebildet ist, welcher Gasgebläsebrenner (18) im oder an dem Trockner (100) angeordnet ist.

3. Trocknereinrichtung nach Anspruch 1 oder 2, **dadurch gekennzeichnet, dass** die externe Heißgasquelle (16) mittels eines Blockheizkraftwerkes (19) gebildet ist, das über die Heißgasleitung (17) wenigstens mittelbar Wärme in den Trocknerraum (10) überführt.

4. Trocknereinrichtung nach einem der Ansprüche 1 bis 3, **dadurch gekennzeichnet, dass** eine Steuereinheit (20) vorgesehen ist, wobei die Steuereinheit (20) zur Steuerung der internen Heißgasquelle (15) und der externen Heißgasquelle (16) eingerichtet ist.

5. Trocknereinrichtung nach Anspruch 4, **dadurch gekennzeichnet, dass** die Steuereinheit (20) derart zur Ansteuerung der Heißgasquellen (15, 16) eingerichtet ist, dass die externe Heißgasquelle (16) eine Wärmegrundversorgung des Trockners (100) bildet und dass die interne Heißgasquelle (15) eine Temperaturregelung für die Trocknungsluft (12) bildet.

6. Trocknereinrichtung nach einem der vorgenannten Ansprüche, **dadurch gekennzeichnet, dass** der Trockner (100) ein Mischmodul (21) aufweist, wobei die interne Heißgasquelle (15) und die externe Heißgasquelle (16) zur Einspeisung von Wärme in das Mischmodul (21) mit diesem verbunden sind und dass im Mischmodul (21) die Heißgase der Heißgasquellen (15, 16) mischbar sind und wobei das gemischte Heißgas an die Trocknungsluft (12) zur Aufheizung abgebbar ist.

7. Trocknereinrichtung nach 2- Anspruch 6, **dadurch gekennzeichnet, dass** die Steuereinheit (20) mit dem Mischmodul (21) verbunden ist, wobei das Mischmodul (21) ein Mischorgan aufweist, mit dem die Zufuhr der Heißgase der Heißgasquellen (15, 16) zur Mischung steuerbar sind.

8. Trocknereinrichtung nach Anspruch 1, **dadurch gekennzeichnet, dass** ein Frischluftwärmetauscher (23) vorgesehen ist, der vom Heißgas der externen Heißgasquelle (16) durchströmbar ist, wobei der Frischluftwärmetauscher (23) dem ersten Wärmetauscher (22) nachgelagert ist, und wobei eine in den Trocknerraum (10) eintretende Frischluft (24) mittels des Frischluftwärmetauschers (23) vor Eintritt in den Trocknerraum (10) erwärmbar ist.

9. Trocknereinrichtung nach einem der Ansprüche 4 bis 8, **dadurch gekennzeichnet, dass** wenigstens ein Feuchtemesselement (26) zur Messung der Feuchte der Trocknungsluft (12) im Trocknerraum (10) vorgesehen ist, wobei die Steuereinheit (20) zur Aufnahme von Feuchtemesswerten des Feuchtemesselementes (26) ausgebildet ist und die Heißgasquellen (15, 16) in Abhängigkeit der Feuchtemesswerte ansteuert.

## Claims

1. A dryer device with a dryer (100) for a web of textile material (1), with a dryer compartment (10), in which at least one air-permeable cylinder (11) is rotatably disposed, and wherein the web of textile material (1) is guidable over a partial circumference of the cylinder (11), wherein heated drying air (12) may flow through the web of textile material (1), wherein for heating the drying air (12) a device (13, 14) for contributing heat is provided, wherein the device (13, 14) for contributing heat includes an internal hot gas source (15), wherein the internal hot gas source (15) forms a component of the dryer (100), and wherein the dryer (100) includes a first heat exchanger (22), by means of which heat is made available for the drying air (12), **characterized in that** the device (13, 14) includes an external hot gas source (16), which is installed peripherally to the dryer (100) and at least indirectly connected to the dryer (100) by means of a hot gas pipeline (17), and **in that** a pre-heat exchanger (25) is provided, into which the hot gas pipeline (17) is guided from the external hot gas source (16) and which is adapted for transferring heat to a heat fluid in a fluid line (32), which fluid line (32) is coupled to the first heat exchanger (22) of the dryer (100).

2. The dryer device according to claim 1, **characterized in that** the internal hot gas source (15) is formed by means of a gas blower burner (18), which gas blower burner (18) is disposed in or at the dryer (100).

3. The dryer device according to claim 1 or 2, **characterized in that** the external hot gas source (16) is formed by means of a block heat station (19), which at least indirectly transfers heat into the dryer compartment (10) via the hot gas pipeline (17).

4. The dryer device according to any of the claims 1 to 3, **characterized in that** a control unit (20) is provided, wherein the control unit (20) is adapted for controlling the internal hot gas source (15) and the external hot gas source (16).

5. The dryer device according to claim 4, **characterized in that** the control unit (20) is adapted for controlling the hot gas sources (15, 16) in such a manner that the external hot gas source (16) forms a basic heat supply of the dryer (100) and **in that** the internal hot gas source (15) forms a temperature control for the drying air (12).

6. The dryer device according to any of the aforementioned claims, **characterized in that** dryer (100) includes a mixing module (21), wherein the internal hot gas source (15) and the external hot gas source (16) are connected to the latter for supplying heat to the mixing module (21), and **in that** the hot gases of the hot gas sources (15, 16) are mixable in mixing module (21), and wherein the mixed hot gas is available for the drying air (12) for heating.

7. The dryer device according to claim 6, **characterized in that** the control unit (20) is connected to the mixing module (21), wherein the mixing module (21) includes a mixer element, by means of which the supply of the hot gases of the hot gas sources (15, 16) for mixing is controllable.

8. The dryer device according to claim 1, **characterized in that** a fresh air heat exchanger (23) is provided, through which hot gas is flowable from the external hot gas source (16), wherein the fresh air heat exchanger (23) is located downstream the first heat exchanger (22), and wherein fresh air (24) entering the dryer compartment (10) is heatable by means of the fresh air heat exchanger (23) prior to entering the dryer compartment (10).

9. The dryer device according to any of the claims 4 to 8, **characterized in that** the at least one hygrometer element (26) for measuring the humidity of the drying air (12) in the dryer compartment (10) is provided, wherein the control unit (20) is formed for receiving measured humidity values of the hygrometer element (26) and controls the hot gas sources (15, 16) depending on the measured humidity values.

## Revendications

1. Dispositif séchoir avec un séchoir (100) pour une nappe de tissu textile (1) avec un espace séchoir (10), dans lequel au moins un tambour (11) perméable à l'air est agencé de façon rotative, et la nappe de tissu textile (1) étant guidable sur au moins une partie circonférentielle du tambour (11), de l'air de séchage (12) chauffé pouvant passer à travers la nappe de tissu textile (1), et un dispositif (13, 14) pour l'apport de chaleur pour le réchauffement de l'air de séchage (12) étant prévu, le dispositif (13, 14) pour l'apport de chaleur comprenant une source de gaz chaud (15) interne, la source de gaz chaud (15) interne formant une partie intégrante du séchoir (100), et le séchoir (100) comprenant un premier échangeur de chaleur (22), avec lequel de la chaleur est dégageable à l'air de séchage (12), **caractérisé en ce que** le dispositif (13, 14) comprend une source de gaz chaud (16) externe, laquelle est mise en place en périphérie du séchoir (100) et est connectée au moins indirectement au séchoir (100) au moyen d'une conduite à gaz chaud (17), et **en ce qu'**un pré-échangeur de chaleur (25) est prévu, dans lequel la conduite à gaz chaud (17) est mené de la source de gaz chaud (16) externe et lequel est adapté au transfert de chaleur à un fluide calorifique dans une conduite à fluide (32), laquelle conduite à fluide (32) est couplée au premier échangeur de chaleur (22) du séchoir (100).

2. Dispositif séchoir selon la revendication 1, **caractérisé en ce que** la source de gaz chaud (15) interne est aménagée au moyen d'un brûleur à jet de gaz (18), lequel brûleur à jet de gaz (18) est agencé dans ou sur le séchoir (100).

3. Dispositif séchoir selon la revendication 1 ou 2, **caractérisé en ce que** la source de gaz chaud (16) externe est aménagée au moyen d'une centrale thermique (19) laquelle transfert au moins indirectement de la chaleur dans l'espace séchoir (10) via la conduite à gaz chaud (17).

4. Dispositif séchoir selon l'une des revendications 1 à 3, **caractérisé en ce qu'**une unité de commande (20) est prévue, l'unité de commande (20) étant adaptée au contrôle de la source de gaz chaud (15) interne et de la source de gaz chaud (16) externe.

5. Dispositif séchoir selon la revendication 4, **caractérisé en ce que** l'unité de commande (20) est adaptée de telle façon à l'asservissement des sources de gaz chaud (15, 16) que la source de gaz chaud (16) externe forme une alimentation de base en chaleur du séchoir (100) et **en ce que** la source de gaz chaud (15) interne forme un réglage de température pour l'air de séchage (12).

6. Dispositif séchoir selon l'une des revendications mentionnées ci-avant, **caractérisé en ce que** le séchoir (100) comprend un module de mélange (21), la source de gaz chaud (15) interne et la source de gaz chaud (16) externe étant connectées au module de mélange (21) pour alimenter ce dernier en chaleur, et **en ce que** les gaz chauds des sources de gaz chaud (15, 16) étant mélangeables dans le module de mélange (21), et le gaz chaud mélangé étant dégageable à l'air de séchage (12) pour le réchauffement.

7. Dispositif séchoir selon la revendication 6, **caractérisé en ce que** l'unité de commande (20) est connectée au module de mélange (21), le module de mélange (21) comprenant un organe de mélange, avec lequel l'alimentation en gaz chauds des sources de gaz chaud (15, 16) pour le mélange est contrôlable.

8. Dispositif séchoir selon la revendication 1, **caractérisé en ce qu'**un échangeur de chaleur d'air frais (23) est prévu, le gaz chaud de la source de gaz chaud (16) externe pouvant passer à travers ce dernier, l'échangeur de chaleur d'air frais (23) étant placé en aval du premier échangeur de chaleur (22), et de l'air frais (24) entrant dans l'espace séchoir (10) étant chauffable au moyen de l'échangeur de chaleur d'air frais (23) avant l'entrée dans l'espace séchoir (10).

9. Dispositif séchoir selon l'une des revendications 4 à 8, **caractérisé en ce qu'**au moins un élément hygromètre (26) est prévu pour mesurer l'humidité de l'air de séchage (12) dans l'espace séchoir (10), l'unité de commande (20) étant aménagée pour la réception des valeurs d'humidité mesurées de l'élément hygromètre (26), et asservissant les sources de gaz chaud (15, 16) en fonction des valeurs d'humidité mesurées.
